# EUROPEAN PATENT APPLICATION

(11) **EP 1 790 469 A1**
(43) Date of publication of application: **30.05.2007**
(21) Application number: 05077711.9
(22) Date of filing: 29.11.2005
(51) Int. Cl.: B32B 15/08, B32B 37/15, B32B 38/00, B32B 38/06

(54) **Method for treating a laminate and the laminate obtainable by the method**

(71) Applicant: Impress Group B.V., 7418 AH Deventer (NL)
(72) Inventor: Jouillat, Jean François, 49150 Bauge (FR)
(74) Representative: Prins, Hendrik Willem

(57) **Abstract**

The invention relates to a method for treating a laminate comprising a substrate foil (8) and at least one plastic coating (8), which method comprises the steps of:
i) forming a the laminate (2); and
ii) providing the plastic coating (8) with a rough surface, and to a laminate (2) obtainable by this method.

## Description

The present invention relates to a method for treating a laminate comprising a metal foil and at least one plastic coating at one side of the foil, and to a laminate obtainable by such method.

In the production of an easy peel closure, an easy peel aluminum foil is applied in an annular container part. This container part is provided on the body of a container and fixed thereto. The easy peel foil is adhered to the annular element via the plastic coating which has heat sealable properties.

In this method for preparing the easy peel closure, the easy peel foil is applied onto the annular element from a hopper in which easy peel foils are stacked. Accordingly, during the manufacturing process an easy peel foil is to be released from the stack and applied on the annular element.

The easy peel foils are thin and the stack is relatively high which result in a mutual stacking of aluminum foils. This stacking has an adverse effect on the manufacturing process for reasons that unwantedly two tact easy peel foils are released from the hopper and applied on the annular element or no easy peel foil is applied.

The invention has for its object to improve the preparation of the easy peel closures by improving the wanted release of one easy peel foil and its application on an easy peel closure.

The invention is based on the insight that the undesired tacking of easy peel foils is result of adhesive forces in between the plastic coating and the other easy peel foil. These adhesive forces are diminished by the application of the present invention.

To that extent the present provides a method for treating a laminate comprising a substrate foil and at least one plastic coating, which method comprises the steps of:
i) forming a the laminate; and
ii) providing the plastic coating with a rough surface. Due to the roughening of the surface of the plastic coating the adhesive forces are reduced to an extent such that the tacking problem is substantially overcome.

The substrate foil may be a metal foil, a plastic foil or a composite foil or layer which imparts to the laminate the easy peel closure function.

In a preferred embodiment of the method according to the invention step i) comprises extruding a formable plastic coating on the substrate foil, and
step ii) comprises forming in the extruded formable plastic coating the rough surface with roughening contact means. This method has as an advantage that after the extrusion of the plastic coating on the substrate foil this plastic coating is still formable such that with roughening contact means the rough surface is formed.

In another embodiment the plastic coating is no longer formable and in order to make the plastic coating formable it is required that the plastic coating is treated with heated roughening contact means.

For both embodiments it is preferred that the roughening contact means comprise roughening rolling means. Other types of roughening contact means comprises plates with a roughening contact surface or reciprocating plates or other type of formed elements.

According to another embodiment step ii) comprises the treating the plastic coating with a laser such that the rough surface is formed. Due to the laser treatment, the surface is roughened.

According to another embodiment of the present invention step i) comprises that application of a plastic coating having activatable components and
step ii) comprises activation of the components such that the rough surface is formed. The plastic coating comprises activatable components which are chemically or physically activated inhomogeneously throughout the plastic coating. Preferably, the activation results in a formation of gas or a formation of volume which result in a rough surface. According to another alternative the activatable component is hardened such that locally harder material is available in the plastic coating and thereby resulting in a roughening of the surface. Components forming gas upon activation are known in the art such as for the formation of effervescent systems. Volume increasing components are known in the art such as from polymerization processes. Components that harden under activation are also known from polymer chemistry such as the formation of thermal hardening plastics.

According to another method according to the invention the rough surface is formed in the plastic coating by the application of granular material. The granular material may be applied during the formation of the plastic formable coating or afterwards after the coating has been softened due to the application of heat.

As indicated above the laminate may eventually be formed into an easy peel aluminum foil of any form and type. To that extent it is preferred that the rough surface is locally applied. In relation to the easy peel aluminum foil the rough surface is applied in the centre of the aluminum foil and not at the circumferential edges where the easy peel aluminum foil is to be sealed to the annular element. Local application may be obtained by using roughening contact means which have locally the required rough structures, by laser treatment of which the laser beam is focussed. The same applies for the means used for the activation of the activatable components.

The method is most preferred when the laminate is an easy peel aluminum foil.

According to another embodiment the roughened plastic coating is covered with a lacquer layer thereby imparted with a rough surface. This provides to effect of non-exposure of the roughened plastic coating thereby avoiding a set off effect of any components present in the roughened plastic coating. Obviously, the lacquer layer may function as the plastic coating.

Another aspect of the invention is a laminate obtained by the method of the present invention.

Mentioned and other features of the method and the laminate according to the present invention will be further illustrated by reference to several embodiments which are given for illustrated purposes. It is not intended that the invention is to any extent limited thereto.

Reference will be made to the annexed drawings in which:
figure 1 is a schematic cross-sectional view of a part of the method for forming an easy peel closure; and
figure 2-6 various embodiments of the present invention for providing a laminate with at least one rough surface.

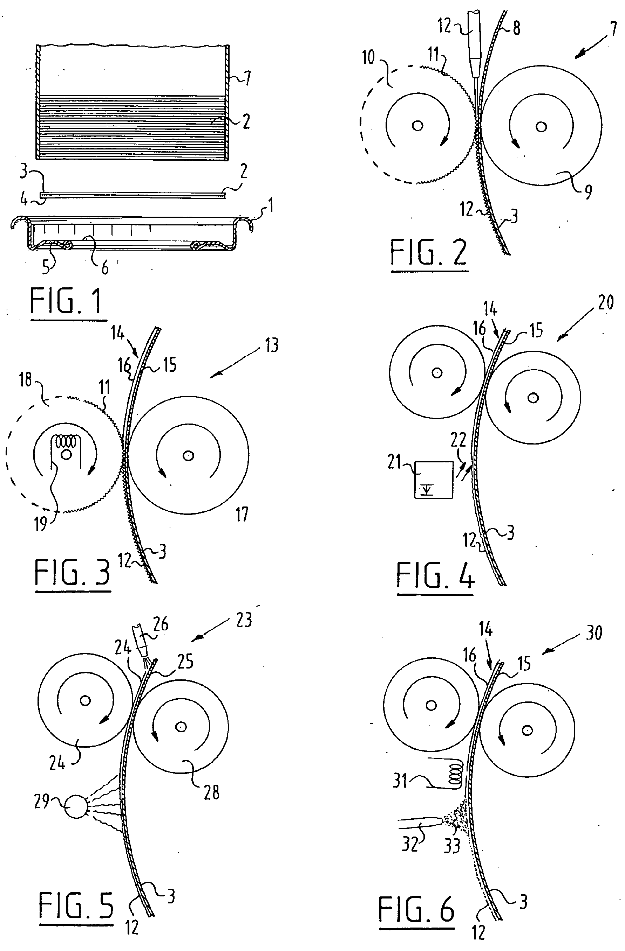

Figure 1 shows an annular element 1 which is to be provided with a laminate 2 according to the invention. The laminate 2 comprises an aluminum layer 3 and a plastic coating 4. The plastic coating is to be applied on the supporting part 5 of the element 1 and is heat sealed thereto at the part 5 and also at the part 6. The laminates 2 are supplied from a cylindrical hopper 7 in which the laminates are stacked.

Figure 2 shows a first embodiments of a method 7 for producing a laminate 2 according to the invention. A sheet 8 of aluminum is fed in between rolling means 9 and 10 which have the form of contact rollers. The contact roller 10 is provided with a rough roller surface 11. The plastic coating is applied on the sheet 8 from an extruder 12. The side of application of extruded formable plastic coating is upstream from the rolling means 9 and 10 such that when the roughening roller 10 contacts the extruded plastic coating it is still formable. This results in a plastic coating 12 having a rough surface and is applied to the aluminum layer 3. This sheet form laminate is subsequently cut into the desired form of the laminate 2.

Figure 3 shows a similar method 13. In this embodiment a laminate 14 comprising a metal layer 15 and a plastic coating 16 is fed in between two contact rolling means 17 and 18. The contact rolling means 18 have the form of a contact roller provided with a rough surface 11. The roller means 18 are heated with a heating unit 19. Upon contact of the heated rough surface 11 with the plastic coating 16 the rough surface is formed. If needed, the rolling means 17 may also be heated. Resulting is a laminate comprising the rough surface 12 on the metal sheet 3.

Figure 4 shows another method 20 for producing a laminate according to the invention. In this embodiment the laminate 14 comprising a metal foil 15 and a plastic coating 16 is directed via roller means toward a laser unit 21. A laser beam 22 contacts and treats the plastic coating 16 thereby forming the rough plastic surface 12 on the metal sheet 3.

A similar method is shown in figure 5. This method 23 comprises the application of a plastic coating 24 on the metal layer 25 by extrusion with an extruder 26. The extruded plastic coating 24 comprises an activatable component. Subsequently, via the roller means 27 and 28 the laminate is directed towards an activation unit 29 where by irradiation the components are activated thereby forming the rough surface 12 on the metal layer 3.

Finally, figure 6 shows another method 30 according to the invention. In this embodiment the laminate 14 comprising on the metal layer 15 the plastic layer 16 is passed through a pair of rollers and subsequently the plastic layer 16 is heated by the heating unit 31 which results in a softening of the plastic coating. Subsequently, via a blast unit 32 granular material, such as very fine silicate particles 33 are blasted into the heated and softened plastic material thereby forming the rough surface 12 on the metal layer 3.

Although described for a laminate comprising at one side the plastic coating, it will be apparent to the skilled person that if the laminate is to comprise a plastic coating with a rough surface at both sides that the embodiments disclosed may be amended in that respect. Furthermore, as indicated above a top coating in the form of a lacquer layer may be applied as well on the plastic coating and/or the substrate layer.

## Claims

1. Method for treating a laminate comprising a substrate foil and at least one plastic coating, which method comprises the steps of:
i) forming a the laminate; and
ii) providing the plastic coating with a rough surface.

2. Method as claimed in claim 1, wherein
step i) comprises extruding a formable plastic coating on the substrate foil, and
step ii) comprises forming in the extruded formable plastic coating the rough surface with roughening contact means.

3. Method as claimed in claim 1, wherein
step ii) comprises forming in the plastic coating the rough surface with a heated roughening contact means.

4. Method as claimed in claim 2 or 3, wherein the roughening contact means comprise roughening rolling means.

5. Method as claimed in claim 1, wherein
step ii) comprises the treating the plastic coating with a laser such that the rough surface is formed.

6. Method as claimed in claim 1, wherein
step i) comprises that application of a plastic coating having activatable components and
step ii) comprises activation of the components such that the rough surface is formed.

7. Method as claimed in claim 6, wherein the activatable components comprise components that by chemical or physical activation form gas, increase in volume and/or harden.

8. Method as claimed in claim 1, wherein the plastic coating comprises granular material.

9. Method as claimed in claim 1-8, wherein the rough surface is locally applied in the plastic coating.

10. Method as claimed in claim 1-9, wherein the substrate foil is a metal foil.

11. Method as claimed in claim 1-10, wherein the roughened plastic coating is covered with a lacquer layer thereby imparted with a rough surface.

12. Method as claimed in claim 1-11, wherein the laminate is an easy peel aluminum foil.

13. Laminate obtainable by the method of claim 1-12.
